# EUROPÄISCHE PATENTSCHRIFT

(11) **EP 1 149 718 B1**
(45) Veröffentlichungstag und Bekanntmachung des Hinweises auf die Patenterteilung: **18.02.2004**
(21) Anmeldenummer: 01106809.5
(22) Anmeldetag: 19.03.2001
(51) Int. Cl.: B60J 1/20

(54) **Seitenfensterrollo mit Schlitzabdeckung**
Roller blind for side-windows with a slit cover
Store pour fenêtre latérale avec obturateur de fente

(30) Priorität: 25.04.2000 DE 10020212
(43) Veröffentlichungstag der Anmeldung: 31.10.2001
(73) Patentinhaber: BOS GmbH & Co. KG, 73760 Ostfildern (DE)
(72) Erfinder: Seel, Holger, 71143 Aidlingen (DE); Walter, Herbert, 73061 Ebersbach (DE)
(74) Vertreter: Rüger, Barthelt & Abel Patentanwälte

(56) Entgegenhaltungen:
- DE-A- 10 028 883
- DE-A- 10 064 513
- DE-A- 19 835 257
- DE-U- 29 900 548
- FR-A- 2 774 947
- US-A- 5 595 229

## Beschreibung

Aus der DE 10 005 970, die nicht vorveröffentlicht ist, ist ein Seitenfenster für Kraftfahrzeuge bekannt. Zwischen der Karosserieaußenhaut und der Innenverkleidung ist eine Wickelwelle drehbar gelagert, an der eine Rollobahn mit einer Kante befestigt ist. Die Rollobahn kann durch einen Schlitz in dem betreffenden Fenster, herausgezogen werden. Im herausgezogenen Zustand ist die Rollobahn nahezu deckungsgleich mit dem Fenster.

Die Betätigung der Rollobahn geschieht elektromotorisch mit Hilfe von Zug- oder Schubgliedern, die an der Vorderkante der Rollobahn angreifen. Unter Vorderkante der Rollobahn ist hierbei jene Kante zu verstehen, die, abgesehen von der Krümmung entsprechend der Fenstergestalt, im wesentlichen parallel zu der Wickelwelle verläuft.

Aufgrund der Anordnung der Betätigungsglieder für die Rollobahn, die beim Ausfahren der Rollobahn, aus dem betreffenden Schlitz in der Fensterleibung auftauchen, muß der Schlitz verhältnismassig breit sein.

Selbst wenn der Schlitz nur eine Breite hat, entsprechend in der Breite eine Verstärkungsleiste an der Vorderkante der Rollobahn, bleibt der Schlitz über einen weiten Bereich offen, wenn das Rollo eingezogen ist. Wegen der Krümmung der Vorderkante die an die betreffende Kante des Fensters angepasst ist, taucht ein wesentlicher Teil der Vorderkante unter den Schlitzrand weg, während nur ein kleiner Bereich durch die Vorderkante und die vorhandene Verstärkungsleiste ausgefüllt wird.

Der offene Schlitz ist nicht nur unschön, sondern birgt auch gewisse Gefahren, hinsichtlich der Verletzung von Kindern, wenn diese ihre Finger in den offenen Schlitz stecken. Außerdem können relativ große Gegenstände in den Hohlraum der Karosserie zwischen dem äußeren Blechkleid und der Innenverkleidung fallen.

Um den Spalt zwischen dem Fenster und der Fensterbrüstung weitgehend abzudecken, ist es aus der FR 2 774 947 bekannt, das Rollo mit einer Abschlussleiste zu versehen, die eine Lippe trägt. Unterhalb der Fensterbrüstung ist in der Tür die Wickelwelle drehbar gelagert, an der mit einer Kante die Rollobahn befestigt ist. Die andere Kante verläuft gemäß der Erläuterung parallel zu der Wickelwelle und ist somit ebenfalls gerade. An dieser Kante ist als Betätigungselement eine L-förmige Leiste befestigt, die auf der Oberseite des Fensterbrüstung aufliegt.

Die DE-19835257 A1 zeigt ein Heckscheibenrollo, das an der Vorderkante der Rollobahn mit einem starren Auszugsprofil versehen ist. Das Auszugsprofil hat eine solche Breite, um bei eingefahrenem Rollo den Auszugschlitz in Querrichtung vollständig zu überdecken. Die überdeckung in Längsrichtung ist nicht vollständig, sobald die Rollobahn trapezförmig ist, weil dann der Schlitz breiter sein muss als das Auszugsprofil an der Vorderkante, deren Länge der Breite des Heckfensters unterhalb des Daches entspricht.

Die US 5.595.229 zeigt ein Fensterröllo für Fahrzeuge, bei denen die Oberkante gekrümmt verläuft. Um ein solches Fenster weitgehend abschatten zu können, weist die Vorderkante der Rollobahn eine polygonartige Näherung auf, bestehend aus einem horizontalen und einem schräg verlaufenden Abschnitt. An der Vorderkante ist ein zweiteiliges Auszugsprofil befestigt. Der eine Teil ist unmittelbar an dem horizontal verlaufenden Bereich der Kante angebracht, während der zweite Teil des Auszugsprofils der schräg verlaufenden Kante gegenübersteht. Dieser Teil ist gegenüber der schräg verlaufenden Kante beweglich. Sein von dem Gelenk abliegendes Ende ist über eine federbelastete Schnur mit der Rollobahn verbunden. Hierdurch wird erreicht, dass bei ausgefahrener Rollobahn das Auszugsprofil im Wesentlichen der Kontur der Vorderkante der Rollobahn folgt. Im eingefahrenen Zustand dagegen kann der bewegliche Teil nach oben klappen und sich auf den Schlitz auflegen, aus dem das Rollo ausgefahren. wird.

Ausgehend hiervon, ist es Aufgabe der Erfindung ein Kraftfahrzeug zu schaffen, bei dem der Schlitz durch das Seitenfensterrollo herausgefahren wird, zumindest weitgehend verschlossen ist.

Diese Aufgabe wird erfindungsgemäß mit dem Fahrzeug mit den Merkmalen des Anspruchs 1 gelöst.

Bei dem neuen Seitenfensterrollo ist in bekannter Weise in der Fensterlaibung ein Schlitz vorgesehen, über den eine Verbindung zu einem Hohlraum in der Fahrzeugkarosserie besteht. In dem Hohlraum, wird eine Rollobahn bei Nichtgebrauch aufbewahrt. Die Rollobahn ist mit einer Vorderkante versehen, deren Verlauf dem Verlauf entspricht, den der Fensterrahmen in jenem Bereich aufweist, der dem Schlitz gegenüber liegt.

Um bei Nichtgebrauch den Schlitz weitgehend zu verschließen ist an der Vorderkante der Rollobahn eine Abdeckleiste angebracht, die bei ausgefahrenem Rollo dem Verlauf der Vorderkante folgt, d.h. sich an diese Vorderkante anschmiegt, während Sie bei eingefahrenem Rollo abschnittsweise von der Vorderkante abgehoben wird, um den Schlitz weitgehend zu verschließen.

Beim Einfahren der Rollobahn in den Hohlraum, wird in die Abdeckleiste entsprechend von der Vorderkante abgehoben um den Schlitz zu verschließen.

Die Fensterlaibung, in der sich der Schlitz befindet, kann sich am unteren Ende der Seitenfensterscheibe befinden. Diese Anordnung wird bevorzugt, wenn das Fenster das Fenster einer Seitentür ist. Eine andere Möglichkeit besteht darin, den Schlitz in einer etwa senkrecht verlaufenden Fensterlaibung unterzubringen, beispielsweise in einer B-Säule. Eine Anordnung, die vorteilhafterweise bei zweitürigen Fahrzeugen angewendet werden kann, wenn die B-Säule im Fensterbereich gerade verläuft.

Der Schlitz, durch den die Rollobahn beim Ein- und Ausfahren hindurch bewegt wird, kann mit dem Schlitz kombiniert werden, durch den auch die Scheibe verläuft, wenn es sich um eine versenkbare Scheibe handelt.

Um die Abdeckleiste im ausgefahrenen Zustand zuverlässig an der Vorderkante zu fixieren, sind Mittel vorgesehen, die dies gewährleisten. Diese Mittel können durch die Abdeckleiste selbst oder andere an der Abdeckleiste oder der Vorderkante vorhandenen Mittel gebildet sein. Wenn die Mittel durch die Abdeckleiste selbst gebildet sind, wird es sich um eine stark federbelastete Abdeckleiste handeln, die aufgrund ihrer Eigenkrümmung bestrebt ist, dem Verlauf der Vorderkante der Rollobahn zu folgen. Beim Einfahren der Rollobahn wird die Abdeckleiste zwangsläufig in eine mehr oder weniger gestreckte Form überführt.

Eine andere Möglichkeit die Abdeckleiste an der Vorderkante festzuhalten, besteht darin, Zugmittel zu verwenden, um die Abdeckleiste an die Vorderkante heranzuziehen. Derartige Maßnahmen kommen insbesondere in Frage, wenn die Abdeckleiste aus einem verhältnismäßig weichen Kunststoffmaterial besteht, das nur geringe Rücksprungkraft zeigt. Die Zugmittel umfassen wenigstens ein Zugglied, das an zumindest einem Ende der Abdeckleiste angreift. Das Zugmittel selbst kann elastisch dehnbar sein oder, wenn es elastisch undehnbar ist, mit einer Zugfeder beaufschlagt werden.

Die Zahl der notwendigen Zugglieder richtet sich nach der Gestalt der Vorderkante. Wenn der höchste Punkt der Vorderkante der Rollobahn, neben einer Seite entsteht, ist die Abdeckleiste an dieser Stelle starr mit der Vorderkante verbunden. Es ist lediglich das andere Ende beweglich und muß durch das Zugglied an die Vorderkante hingezogen werden. Wenn der höchste Punkt der Vorderkante von den beiden Seitenrändern entfernt liegt, erfolgt die Befestigung an der Abdeckleiste an dieser Stelle. Es ist dann notwendig beide Enden der Abdeckleiste mit jeweils eigenen Zugmitteln an die Vorderkante heranzuziehen.

Das Festhalten der Abdeckleiste an der Vorderkante der Rollobahn, kann auch ohne elastische Glieder geschehen, beispielsweise mit Hilfe von Magneten. Diese Magneten können einzelne voneinander getrennte Magnete sein oder die Abdeckleiste ist insgesamt aus einem Kunststoff hergestellt, der mit ferromagnetischem Material gefüllt ist, ähnlich wie die Dichtleisten an Kühlschränken. Diese Anordnung hat den Vorteil, dass sich die Abdeckleiste selbsttätig an der Vorderkante der Rollobahn festhält, wenn diese aus einem entsprechenden ferromagnetischen Material besteht. Bei eingezogenem Rollo wird die Abdeckleiste an der Fensterleiste festgehalten, wozu diese ebenfalls vorzugsweise aus ferromagnetischem Material besteht.

Die Länge der Abdeckleiste, richtet sich danach, wie groß die Schlitzlänge ist, die bei eingezogenem Rollo wegen der Krümmung der Vorderkante nicht durch die Verstärkungsleiste an der Vorderkante Rollobahn ausgefüllt wird.

Unabhängig davon, dass ein Teil des Schlitzes auch durch die Vorderkante der Rollobahn ausgefüllt sein könnte, ist es aus optischen Gründen zu bevorzugen, wenn die Abdeckleiste trotzdem eine Länge hat, derart, dass der Schlitz über seine gesamte Länge abgedeckt wird.

Um das gewünschte selbsttätige Abheben der Abdeckleiste von der Rollobahn zu erreichen, ist die Abdeckleiste zumindest breiter als der Schlitz. Die Anordnung kann hierbei so getroffen werden, dass die Abdeckleiste über ihre gesamte Länge einen der Schlitzränder seitlich überragt. Diese Anordnung ist zu bevorzugen, wenn für die versenkbare Seitenscheibe und die Rollobahn ein und derselbe Schlitz verwendet wird.

Es ist aber denkbar die Abdeckleiste beide Schlitzränder überdecken zu lassen. Dies ist zweckmäßig bei starren Seitenscheiben, bzw. dann, wenn für die versenkbare Seitenscheibe und das Seitenfensterrollo Platz genug ist, um zwei getrennte Schlitze vorzusehen, die nebeneinander verlaufen.

Wenn die Rollobahn aus einem Material besteht, dass auch mit kleinem Radius aufwickelbar ist, besteht die Möglichkeit im Hohlraum eine Wickelwelle drehbar zu lagern, auf der die Rollobahn aufgewickelt wird. Anstatt die Rollobahn selbst unmittelbar aufzuwickeln, kann Sie auch auf ihrer Hinterkante mit Bändern oder Seilen versehen sein, die ihrerseits auf schmale Band- oder Seilscheiben aufgewickelt werden. Die Rollobahn selbst, bleibt in diesem Falle gestreckt. Eine solche Anordnung ist von Vorteil, bei starren Seitenscheiben, wenn der Schlitz bezogen auf die Fahrzeugslängsrichtung nicht gerade verläuft.

Zum Betätigen der Rollobahn, d.h. zum Einfahren ist eine Federeinrichtung vorgesehen, mit deren Hilfe die Rollobahn in den Hohlraum zurückgezogen werden kann. Eine solche Anordnung ist zu bevorzugen, wenn es sich um ein handbedienbares Seitenfensterrollo handelt, dass durch Erfassen eines Handgriffes an der Vorderkante bzw. der Abdeckleiste herausgefahren, bzw. herausgezogen wird.

Im Falle des fernbedienbaren Seitenfensterrollos wird die Kombination aus einem Federantrieb und einem elektromotorischen Antrieb bevorzugt. Dabei wird mit Hilfe des Federantriebs, die Rollobahn gespannt gehalten, während der elektromotorische Antrieb die gewünschte Stellung der Rollobahn vorgibt. Bei dieser Anordnung kommen im wesentlichen dieselben Ergebnisse zustande, unabhängig davon, ob der Federantrieb mit der Hinter- oder Unterkante der Rollobahn zusammenwirkt während der elektromotorische Antrieb die Vorderkante beaufschlagt, oder, wenn kinematisch umgekehrt, der Elektromotor an der Hinterkante der Rollobahn einwirkt, die ständig im Hohlraum verbleibt.

Das Ausfahren der Rollobahn kann durch Schubglieder erfolgen, oder mit Hilfe einer galgenähnlichen Konstruktion, wie sie in der DE 10 005 970 gezeigt ist.

Im übrigen sind Weiterbildungen Gegenstand von Unteransprüchen.

In der Zeichnung sind Ausführungsbeispiele des Gegenstandes der Erfindung dargestellt. Es zeigen:
- Fig. 1: den Frontbereich einer Limousine mit Blick auf die Innenseite der hinteren rechten Tür, in einer aufgebrochenen perspektivischen Darstellung,
- Fig. 2: die hintere rechte Seitentür nach Fig. 1, in einer perspektivischen schematischen Darstellung und teilweise aufgebrochen,
- Fig. 3: die Vorderkante der Rollobahn des Seitenfensterrollos nach Fig. 2, in Verbindung mit der Abdeckleiste in einer vergrößerten Ansicht, in einem Schnitt längs der Linie III-III,
- Fig. 4: den oberen Bereich der Tür nach Fig. 2 mit teilweise ausgezogenem Rollo,
- Fig. 5: den oberen Bereich der Tür nach Fig. 2 mit eingefahrenem und
- Fig. 6: die Vorderkante des Seitenfensterrollos nach Fig. 2 sowie die zugehörige Abdeckleiste, die mit Hilfe eines Zugmittels an die Vorderkante herangezogen wird, in einer teilweise aufgebrochenen Seitenansicht.

In der nachfolgenden Figurenbeschreibung werden Begriffe wie "vorne", "hinten", "oben" oder "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicher Weise gebraucht werden. Lediglich bei der Bezugnahme auf die Rollobahn werden die Begriffe Vorderkante oder Hinterkante auf die Rollobahn selbst bezogen unabhängig von der Einbaulage in dem Fahrzeug.

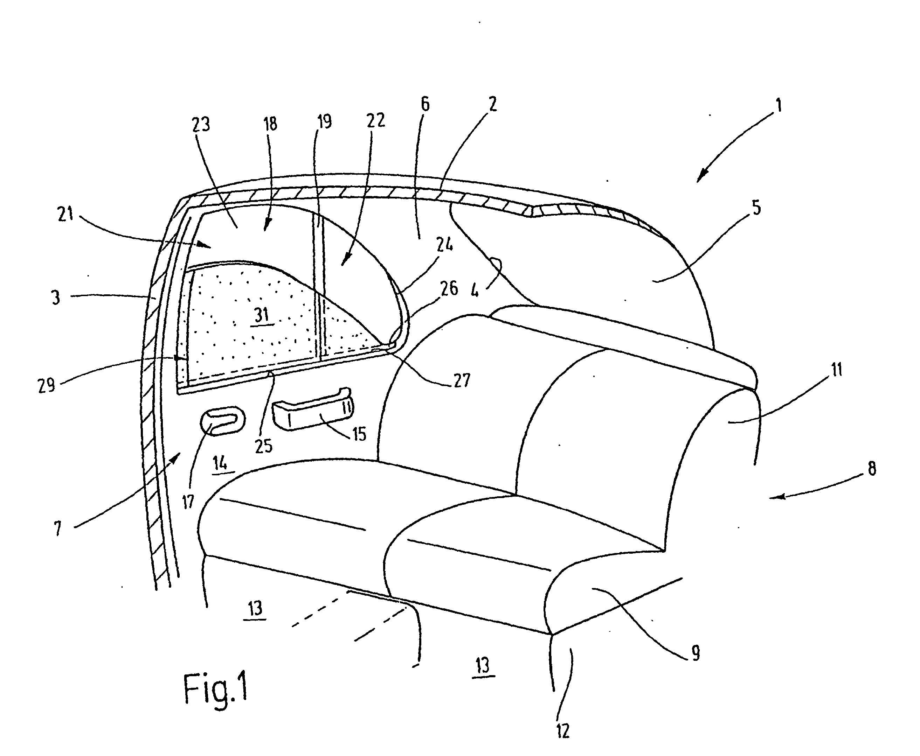

Fig. 1 stellt den aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in eine Heckfensteröffnung 4 über, in der eine Heckscheibe 5 eingesetzt ist. Seitlich endet die Heckscheibenöffnung 4 an einer C-Säule 6, die sich im Abstand zu der B-Säule 3 befindet. Zwischen der B-Säule 3 und der C-Säule 6 ist an der B-Säule 3 eine hintere, reche Seitentür 7 in der bekannten Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Die dem Innenraum zugekehrte Innenseite der Seitentür 7 ist mit einer Innenverkleidung 14 versehen, an der ein Türgriff 15 befestigt ist und in dem eine Betätigungsklinke 17 eingelassen ist, um das Schloss der Seitentür 7 zu öffnen.

Die Seitentür 7 enthält oberhalb der Innenverkleidung 14 eine Fensteröffnung 18, die durch einen Zwischensteg 19 in zwei Abschnitte 21 und 22 aufgeteilt ist. Der Abschnitt 22 hat eine etwa dreieckförmige Gestalt, während der Abschnitt 21 im weitesten Sinne rechteckig ist. In ihm befindet sich eine in bekannter Weise versenkbare Seitenfensterscheibe 23. Die beiden Abschnitte 21, 22 sind durch den als Fensterscheibenführung dienenden Steg 19 voneinander getrennt.

Beide Abschnitte 21, 22 werdew außen von einer durchgehenden gemeinsamen Fensterlaibung 24 umgeben. Die Fensterlaibung bildet unten einen im Wesentlichen geraden Abschnitt 25, der etwas breiter ist als der Rest der Fensterlaibung 24. In dem Fensterlaibunbsabschnitt 25 befindet sich ein Schlitz 26, der sich über die gesamte Länge des Fenstelaibungsabschnitts 25 erstreckt. Er wird zum Wageninneren von einem Schlitzrand 27 begrenzt. Seine äußere Begrenzung ist die Fensterscheibe 23 sowie die Scheibe in dem Fensterabschnitt 22.

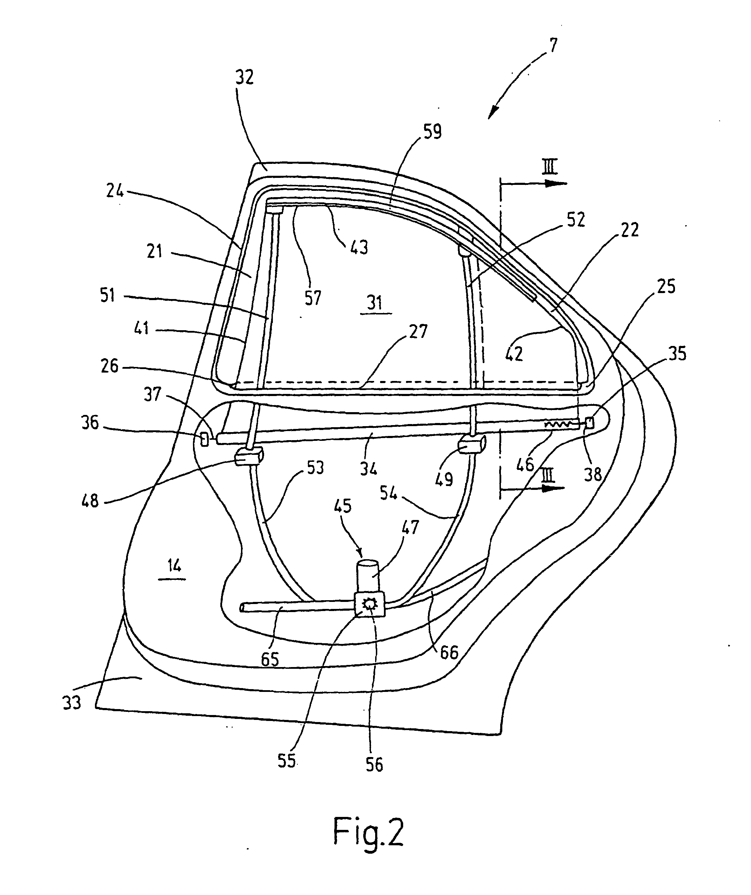

Die Seitentür 7 ist mit einem, in der Figur 2 im Einzelnen dargestellten, Seitenfensterrollo 29 versehen, dessen Rollobahn 31 in den Darstellungen der Figuren 1 und 2 teilweise ausgefahren ist, um so den Fondbereich der Fahrgastzelle gegen seitliche Sonneneinstrahlung zu schützen. Die Rollobahn 31 läuft durch den neben oder unterhalb der Fensterrahmenabschnitte 21, 22 vorhandenen Schlitz 26.

In Fig. 2 ist die Seitentür 7 gesondert veranschaulicht. Es sind in Fig. 2 ein umlaufender Türfalz 32, Abschnitte der aus Blech bestehenden Türaußenhaut 33 sowie die aufgebrochen gezeigte Innenverkleidung 14 zu erkennen, die sich auf der Innenschale der Tür 7 befindet.

Zu dem Seitenfensterrollo 29 gehört eine Wickelwelle 34, die unterhalb des Fensterlaibungsabschnitts 25 hinter der Innenverkleidung 14 auf der Tür 7 gelagert ist. Dazu trägt die Tür 7 im Abstand von einander zwei Lagerböcke 35 und 36 die Lagerzapfen 37 und 38 aufnehmen, die axial aus der rohrförmigen Wickelwelle 34 hervorstehen.

Die Rollobahn 31 besteht aus einem Zuschnitt aus einer Kunststofffolie, die ausreichend das Sonnenlicht abschirmt. Die Außenkontur entspricht der Außenkontur der Fensteröffnung 18, d.h. der Summe der beiden Fensteröffnungen 21 und 22.

Die Rollobahn 31 wird von einer in Fahrtrichtung liegenden seitlichen geraden Kante 41, einer hinteren konturierten Kante 42 sowie einer Vor- oder Oberkante 43 und einer an der Wickelwelle 34 befestigten, nicht erkennbaren Kante, begrenzt.

Um die Rollobahn 31 ein- oder auszufahren, ist eine Antriebseinrichtung 45 vorgesehen. Zu ihr gehört ein schematisch gezeigter Federmotor 46, der sich in der Wickelwelle 34 befindet. Der Federmotor 46 ist einends mit der Wickelwelle 34 fest verbunden. Sein anderes Ende ist drehfest an den Lagerzapfen 38 angekoppelt. Der Lagerzapfen 38 wiederum sitzt drehfest in dem Lagerbock 35. Der Federmotor 46 erzeugt eine Vorspannkraft im Sinnes eines Aufwickeln der Rollobahn 31 auf die Wickelwelle 46. Hierzu ist die Rollobahn 31 an der Wickelwelle 34 beispielsweise mittels eines Keders in bekannter Weise befestigt.

Ein weiterer Bestandteil der Antriebseinrichtung 45 ist ein Getriebemotor 47, der wie nachstehend beschrieben mit der Vorderkante 43 getrieblich gekoppelt ist.

Unterhalb der Wickelwelle 34 sind an der Tür 7 im Abstand zu einander zwei Gleitführungsblöcke 48 und 49 befestigt. Aus jedem der Gleitführungsblöcke 48, 49 tritt nach oben ein drucksteifes und verhältnismäßig biegesteifes zylindrisches Betätigungsglied 51, 52 aus. Das obere freie Ende der Betätigungsglieder 51, 52 ist mit der Vorderkante 43 fest verbunden. Die nach oben durch den Schlitz 26 jeweils ausgeschobene Teile der Betätigungsglieder 51, 52 laufen parallel zueinander

Ausgehend von den Führungsblöcken 48, 49 führen schlauchförmige Hüllen 53, 54 zu dem Getriebemotor 47. Die Hüllen dienen der drucksteifen Führung der in ihnen gleitenden Betätigungsglieder 51, 52.

Jedes Betätigungsglied 51, 52 wird von einem drucksteifen, linienförmigen Element, beispielsweise einem flexiblen Metall- oder Kunststoffdraht, der Seele eines Bowdenzugs oder einer schubsteifgeführten, verseilten Drahtlitze gebildet. Zumindest an dem motorseitigen Ende trägt jedes Betätigungsglied 51, 52 auf seiner Außenumfangsfläche eine eine Verzahnung bildende Drahtwicklung, die unverschiebbar mit dem Betätigungsglied 51, 52 verbunden ist. Betätigungsglieder dieser Art sind auch unter der Handelsbezeichnung "SU-flexwelle" verfügbar und werden unter anderem bei Fensterhebern eingesetzt.

Der Antriebsmotor 47 ist ein permanent erregter Gleichstrommotor, dem ein Untersetzungsgetriebe 55 nachgeordnet ist. Auf einer Ausgangswelle des Getriebes 55 sitzt drehfest ein Stirnzahnrad 56, dessen Teilung mit der Teilung der Schnecke oder Schraube auf den Betätigungsgliedern 51, 52 übereinstimmt. Die Betätigungsglieder 51, 52 laufen an einander gegenüberliegenden Seiten an dem Zahnrad 56 tangential vorbei, wobei ihre Außenverzahnung in mit dem Zahnrad 56 kämmt.

Auf diese Weise ist der Antriebsmotor 47 mit der Vorderkante 43 der Rollobahn 31 getrieblich verbunden.

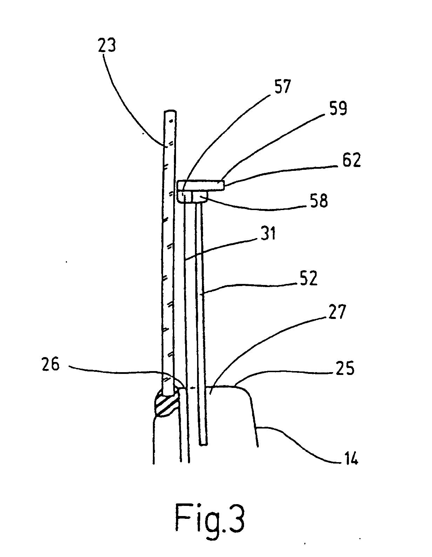

Wie die schematisierte Schnittdarstellung von Fig. 3 zeigt, ist die Vorderkante der Rollobahn 31 mit einer Verstärkungsleiste 57 versehen, die sich fast über die gesamte Länge der Vorderkante zwischen der Seitenkante 41 und der Seitenkante 42 erstreckt.

Die Verstärkungsleiste 57 ist im Bereich der beiden Betätigungsglieder 51 und 52 mit Aufnahmetaschen 58 versehen, in denen die freien Enden der Betätigungsglieder 51, 52 stecken.

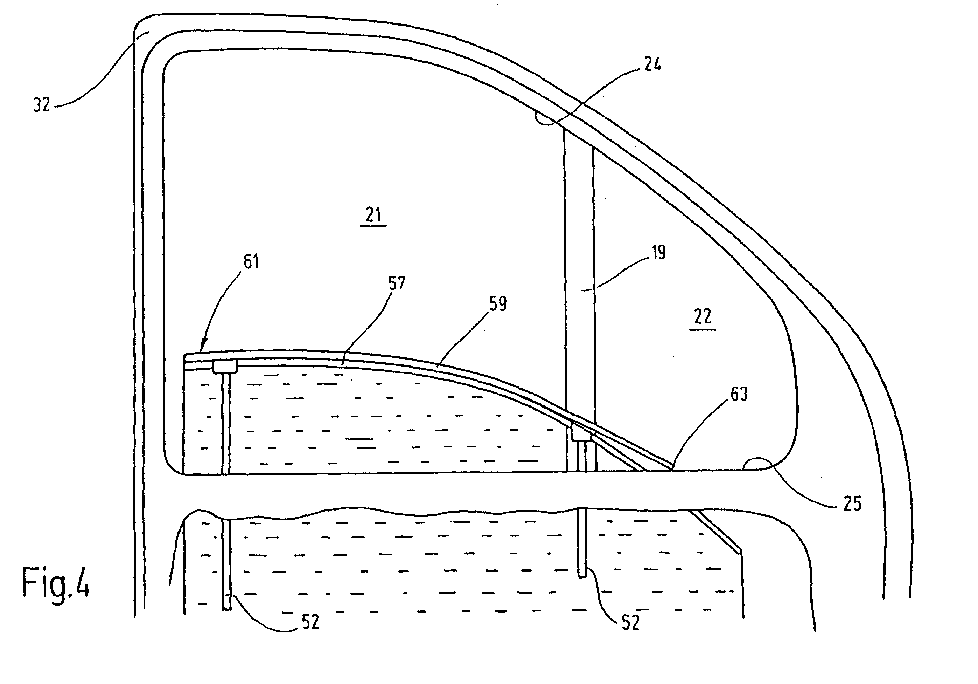

Auf der Oberseite der Verstärkungsleiste 57 sitzt eine Abdeckleiste 59, deren Länge der Länge des Schlitzes 26 entspricht. Sie ist gemäß Fig. 4 in der Nähe der Seitenkante 41 bei 61 fest und unlösbar mit der Verstärkungsleiste 57 verbunden. Die Abdeckleiste 59 besteht beispielsweise aus einem im Querschnitt rechteckigen Profil mit erhöhter federnder Rücksprungkraft, Sie ist so gebogen, dass sie im entspannten Zustand über ihre gesamte Länge eine Krümmung aufweist, die etwas kleiner ist als die kleinste Krümmung im Bereich der Vorderkante 43 bzw. der Verstärkungsleiste 57.

Die Breite der Abdeckleiste 59 ist so bemessen, dass sie einerseits an der Innenseite der Fensterscheibe 23 bzw. der Führungsschiene 19 anliegt und andererseits, wie nachstehend beschrieben, mit ihrer von der Fensterscheibe 23 abliegenden Kante 62 den Schlitzrand überdecken kann. Die Abdeckleiste 59 ist somit breiter als der Schlitz 26, der in dem unteren Fensterleibungsabschnitt 25 ausgebildet ist.

Da die Abdeckleiste 59 bei 61 fest mit der Verstärkungsleiste 57 verbunden ist, schmiegt sie sich, wie Fig. 4 zeigt, über ihre gesamte Länge fest an die von der Rollobahn wegweisende Oberseite der Verstärkungsleiste 57 an. .Zwischen der Unterseite der Abdeckleiste 59 und der Oberseite der Verstärkungsleiste 57 besteht kein Spalt.

Ihr anderes von der Befestigungsstelle 61 abliegendes Ende 63 lässt sich jedoch jederzeit federelastisch von der Oberseite der Verstärkungsleiste 57 abheben. Aufgrund der Art der Verbindung zwischen der Abdeckleiste 59 mit der Verstärkungsleiste 57 können diese gegeneinander nicht verdreht werden.

Die Funktionsweise des insoweit beschriebenen Seitenfensterrollos 29 ist wie folgt, wobei von der ausgefahrenen Stellung gemäß Fig. 2 ausgegangen wird:

Die beiden Betätigungsglieder 51 und 52 sind mit Hilfe des Antriebsmotors 47 ausgefahren und haben die Vorderkante 43 mit der Verstärkungsleiste 57 bis in die Nähe des oberen Abschnitts der Fensterleibung 24 bewegt. Es verbleibt nunmehr ein kleiner Spalt zwischen der Vorderkante des Seitenfensterrollos 26 und dem oberen Abschnitt der Fensterlaibung 24. Die Fensteröffnung 18 ist nahezu vollständig mit dem Rollobahnzuschnitt 31 überdeckt.

Da auf die Abdeckleiste 59 keine Fremdkraft einwirkt schmiegt sie sich, wie bereits erläutert, eng an die nach oben zeigenden Außenseite der Verstärkungsleiste 57 an.

Die Rollobahn 31 wird mit Hilfe des Federmotors 46 gespannt gehalten, der bestrebt ist die Rollobahn 31 auf die Wickelwelle 34 aufzuwickeln. Hieran wird sie mit Hilfe der Betätigungsglieder 51, 52 gehindert, deren unteres Ende durch den Antriebsmotor 57 blockiert ist, so dass sie durch die Wirkung des Federmotors 46 nicht zurückgedrückt werden können.

Wenn der Benutzer das Seitenfensterrollo 29 einfahren will, setzt er mit der entsprechenden Drehrichtung den Antriebsmotor 47 in Gang, der daraufhin die Betätigungsglieder 51, 52 bezogen auf die Darstellung nach unten zieht und die dabei über das Getriebe 55 überstehenden Ende in Schutz- oder Speicherrohre 65, 66 zurückbewegt.

In dem Maße, in dem die Betätigungsglieder 51 und 52 durch den Schlitz 26 hindurch nach unten verschwinden, bewegt sich die Vorderkante 43 der Rollobahn 31 ebenfalls nach unten. Nach einer entsprechenden Wegstrecke wird das mit nach unten wandernde, tieferliegende Ende 63 der Abdeckleiste 59 auf dem Fensterleibungsabschnitt 25 neben dem Schlitzrand 27 aufstoßen, wie dies Fig. 4 zeigt. Es wirkt nun eine Fremdkraft auf die Abdeckleiste 59 ein, die bestrebt ist, die Abdeckleiste 59 von der Verstärkungsleiste 57 abzuheben. Da die Rücksprungkraft in der Abdeckleiste 59 zwar relativ hoch ist, um den anschmiegenden Verlauf sicherzustellen, jedoch kleiner ist als die Aufwickelkraft durch den Federmotor 46, wird die Rollobahn 31 weiter eingezogen. Die Abdeckleiste 59 wird zunehmend von der Verstärkungsleiste ab 57 abgehoben und in eine im Wesentlichen gestreckte Stellung überführt.

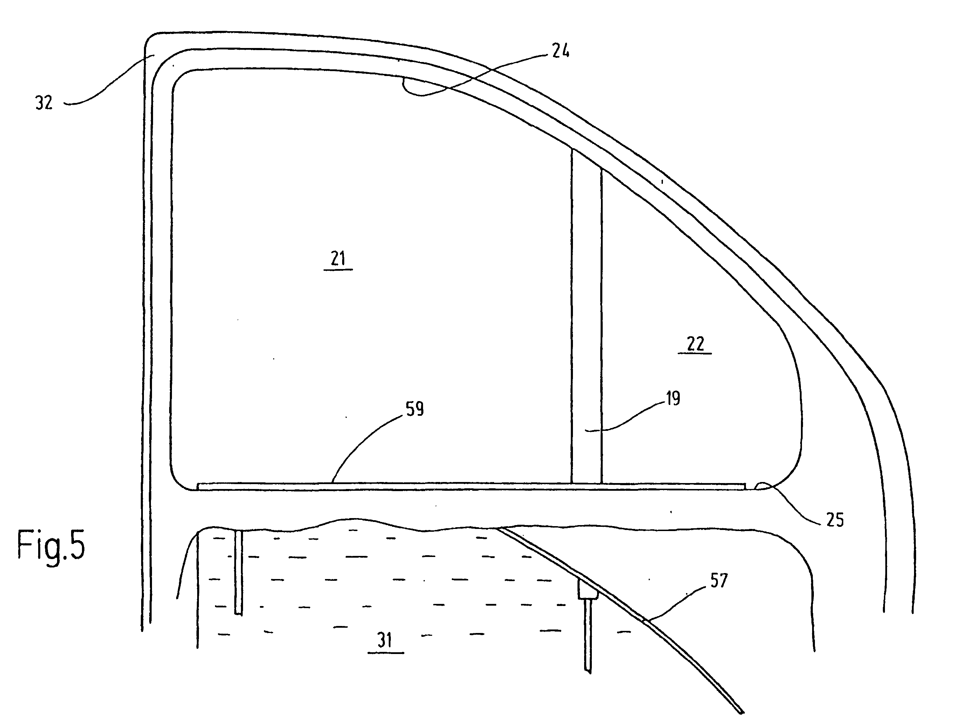

Wenn das Seitenfensterrollo 29 schließlich gemäß Fig. 5 vollständig eingefahren ist, befindet sich die Verstärkungsleiste 57 weitgehend unterhalb des Schlitzes 26 in dem Innen- oder Hohlraum der Tür 7, während die Abdeckleiste 59 neben dem Schlitzrand 27 auf dem Fensterleibungsabschnitt 25 aufliegt und den Schlitz 26 überdeckt.

Das untere Bewegungsende wird erreicht, wenn der starr und unbeweglich mit der Verstärkungsleiste 57 verbundene Endabschnitt 61 auf der Oberseite des Fensterlaibungsabschnittes 25 aufliegt und eine weitere Abwärtsbewegung blockiert.

Beim Ausfahrend des Seitenfensterrollos 29 erfolgt die umgekehrte Bewegung. Die Verstärkungsleiste 57 wird mit Hilfe der durch den Schlitz 26 nach oben ausfahrenden Betätigungsglieder 51 und 52 angehoben. In dem Maße in dem die Verstärkungsleiste 57 angehoben wird, wird es der Abdeckleiste 59 ermöglicht sich wieder an die Oberseite der Abdeckleiste 57 anzuschmiegen. Sie wird beim Aufwärtshub von dem Fensterleibungsabschnitt 25 fortschreitend abgehoben bis schließlich wieder die Stellung nach Fig. 2 erreicht ist.

Anstatt einer Abdeckleiste 59 zu verwenden, die eine verhältnismäßig hohe Rücksprungkraft aufweist, kann auch eine Abdeckleiste eingesetzt werden, deren Rücksprungkraft relativ gering ist. In einem solchen Falle wird eine Kunststoffleiste verwendet, die mit magnetisierten Partikeln gefüllt ist und sich mit Hilfe von Magnetkraft an der Verstärkungsseite 57 festhält, die ebenfalls mit ferromagnetischen Partikeln gefüllt ist.

Anstatt die magnetisierten Partikel in der Abdeckleiste 59 unterzubringen, besteht auch die Möglichkeit diese Partikel in die Verstärkungsleiste 57 zu integrieren, während die Abdeckleiste 59 lediglich unmagnetisierte ferromagnetische Partikel enthält.

Je nach der Fenstergeometrie bzw. abhängig von den Wickelverhältnissen kann die Abdeckleiste 59 auch im mittleren Bereich fest mit der Verstärkungsleiste 57 verbunden werden. Es sind dann beide Enden der Abdeckleiste abzuheben, wenn das Fensterrollo 21 eingefahren ist.

Eine derartige Anordnung ist auch bei dem in den Fig. 4 und 5 ausgeführten Ausführungsbeispiel möglich, wenn dafür gesorgt wird, dass der Wickel aus der Rollobahn 31 auf der Wickelwelle 34 in eine kegelstumpfförmige Gestalt gebracht wird. Die nach vorne zeigende Seitenkante 41 würde dann etwas schneller aufgewickelt werden als die hintere Seitenkante 42. Der höchste Punkt der Abdeckleiste 57 wäre im eingefahrenen Zustand nicht mehr ihr linkes Ende, sondern eine Stelle irgendwo in der Nähe der Mitte. An dieser Stelle wäre die Abdeckleiste 59 starr mit der Verstärkungsleiste 57 zu verbinden.

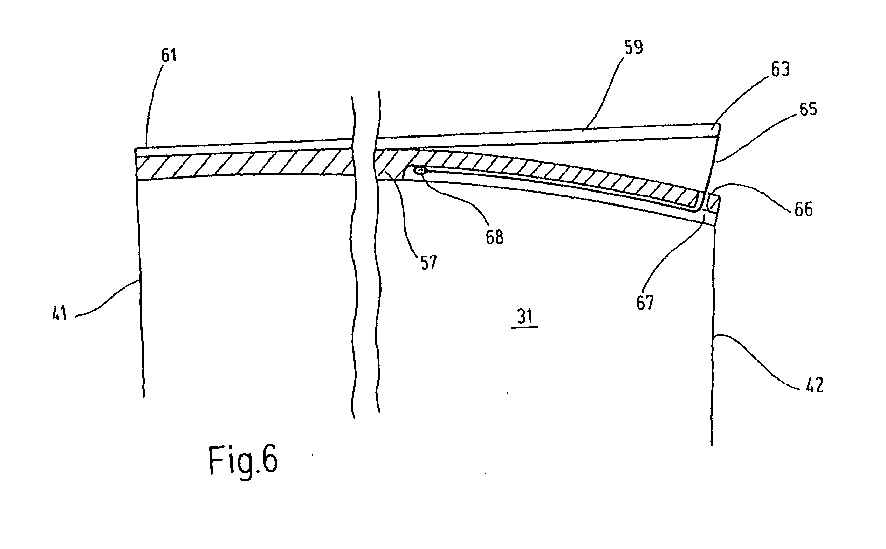

Anstatt die Abdeckleiste 59 allein durch Eigenspannung an der Oberweite der Verstärkungsleiste 57 zu halten, ist wie Fig. 6 zeigt auch eine Lösung denkbar, bei der mit Hilfe von Zuggliedern 65 das Heranführen erzwungen wird. Dort, wo bei ausgefahrener Rollobahn 31 das betreffende Ende 63 der Abdeckleiste 59 auf der Verstärkungsleiste 57 aufliegt, enthält die Verstärkungsleiste 57 eine zu ihrer Unterseite hin führende Öffnung 66. Die Öffnung 66 führt von der Oberseite der Verstärkungsleiste 57 in eine Nut 67, die an der Unterseite in der Verstärkungsleiste 57 neben der Rollobahn 31 vorgesehen ist. Die Nut 67 verläuft in Längsrichtung der Verstärkungsleiste 57. Sie dient der Unterbringung des in sich elastischen Zuggliedes 65. Ein Ende des elastischen Zuggliedes 65 ist mit dem Ende 63 in der Abdeckleiste 59 verbunden, während das andere Ende bei 68 in einer Schlaufe endet die in einen entsprechenden Haken in der Nut 67 eingehängt ist.

Mit Hilfe des in sich elastischen Zuggliedes 65, bspw. einer umsponnenen Gummischnur wird das Ende 63 auf die Oberseite der Verstärkungsleiste 57 hingezogen.

Beim Einfahren der Rollobahn wird durch die Oberseite des Fensterleibungsabschnittes die Abdeckleiste 59, wie zuvor beschrieben, gegen die Wirkung des Zuggliedes 65 von der Oberseite der Verstärkungsleiste 57 weggezogen.

In eingefahrenen Zustand tritt bei allen gezeigten Varianten eine Kraft auf, die die Abdeckleiste 59 auf der Oberseite des Fensterlaibungsabschnittes 25 festhält, womit der Schlitz 26 verschlossen ist.

Die Länge der Abdeckleiste 59 ist zweckmäßigerweise so bemessen, dass sie in beiden Richtungen über die in Längsrichtung liegenden Enden des Schlitzes 26 übersteht. Dies bedeutet, dass die Abdeckleiste 59 nicht wie in den Figuren gezeigt im Bereich der linken Seitenkante 51 mit der Abdeckleiste 57 endet, sondern über diese ein entsprechendes Stück übersteht.

Zusammenfassend ist ein Seitenfensterrollo 29 in der Karosserie eines Kraftfahrzeuges integriert. Die Rollobahn 31 kann in den Hohlraum zwischen der Innenverkleidung 14 und der Außenhaut des Fahrzeugs zurückgezogen werden. Die Rollobahn 31 tritt durch einen Schlitz 26 in der Fensterlaibung 24 aus. Um diesen Schlitz 26 bei Nichtgebrauch des Seitenfensterrollos zu verschließen, ist mit der Verstärkungsleiste 57 an der Vorderkante 43 der Rollobahn 31 eine flexible Abdeckleiste 59 verbunden, die im ausgefahrenen Zustand sich an die Kontur der Verstärkungsleiste 57 anschmiegt. Im eingefahrenen Zustand wird sie abschnittsweise von der Verstärkungsleiste 57 abgehoben und liegt den Schlitz 26 verschließend auf wenigsten einem der Schlitzränder 27 auf.

## Patentansprüche

1. Kraftfahrzeug
mit wenigstens einem Seitenfenster (18), das von einem Fensterlaibungsabschnitt (25) sowie einer gegenüberliegenden Fensterrahmenkante sowie gegebenenfalls weiteren Fensterrahmenkanten begrenzt ist,
mit einem Hohlraum, der sich bezogen auf den Fensterlaibungsabschnitt (25) auf der anderen Seite befindet wie das Fenster (18) und der nach einer Seite durch den Fensterlaibungsabschnitt (25) begrenzt ist,
mit einem in dem Fensterlaibungsabschnitt (25) befindlichen Schlitz (26),
mit einer Rollobahn (31),
- deren Zuschnitt zumindest in einem Abschnitt ihrer Längserstreckung zumindest angenähert der Form des Seitenfensters (18) entspricht,
- die eine Vorderkante (43) aufweist, deren Verlauf zumindest angenähert dem Verlauf der Fensterrahmenkante entspricht, die dem Fensterlaibungsabschnitt (25) gegenüber liegt,
- die sich bei Nichtgebrauch in dem Hohlraum befindet und
- die durch den Schlitz (26) hindurch vor das Seitenfenster (18) bewegbar ist,
mit einer Verstärkungsleiste (57), die an der Vorderkante (43) der Rollobahn (31) vorgesehen ist,
mit einer Betätigungseinrichtung (45) für die Rollobahn. (31), um die Rollobahn (31) zumindest in den Hohlraum zurück zu bewegen, und
mit einer flexiblen Abdeckleiste (59), die an der Verstärkungsleiste (57) befestigt ist und dazu eingerichtet ist, den Schlitz (26) zumindest teilweise zu verschließen, wenn sich die Rollobahn (31) zur Gänze in dem Hohlraum befindet.

2. Kraftfahrzeug nach Anspruch 1, **dadurch gekennzeichnet, dass** der Fensterlaibungsabschnitt (25) unterhalb des Seitenfensters (18) verläuft.

3. Kraftfahrzeug nach Anspruch 1, **dadurch gekennzeichnet, dass** der Fensterlaibungsabschnitt (25) etwa gerade verläuft.

4. Kraftfahrzeug nach Anspruch 1, **dadurch gekennzeichnet, dass** das Seitenfenster (18) eine Scheibe (23) aufweist, die durch den Schlitz (26) hindurchbewegbar ist.

5. Kraftfahrzeug nach Anspruch 1, **dadurch gekennzeichnet, dass** das Seitenfenster (18) eine Scheibe aufweist, die unbeweglich ist.

6. Kraftfahrzeug nach Anspruch 1, **dadurch gekennzeichnet, dass** das Seitenfenster (18) ein Seitenfenster einer Tür (7) ist.

7. Kraftfahrzeug nach Anspruch 1, **dadurch gekennzeichnet, dass** Mittel (59,65) vorgesehen sind, um die Abdeckleiste (59) über ihre gesamte Länge an der Vorderkante (43) anliegend zu halten, wenn die Rollobahn (31) zumindest so weit vorgeschoben ist, dass die Vorderkante (43) zur Gänze oberhalb des Schlitzes (26) steht.

8. Kraftfahrzeug nach Anspruch 7, **dadurch gekennzeichnet, dass** die Mittel durch die Abdeckleiste (59) selbst gebildet sind, die federelastisch ist.

9. Kraftfahrzeug nach Anspruch 8, **dadurch gekennzeichnet, dass** die Abdeckleiste (59) im entspannten Zustand eine Krümmung aufweist, die kleiner ist als die Krümmung der Vorderkante (43) der Rollobahn (31), und dass sich die Abdeckleiste (59) auf Grund der Eigenelastizität selbsttätig an der Vorderkante (43) anliegend hält.

10. Kraftfahrzeug nach Anspruch 1, **dadurch gekennzeichnet, dass** die Abdeckleiste (59) in einem mittleren Bereich mit der Vorderkante (43) verbunden ist.

11. Kraftfahrzeug nach Anspruch 7, **dadurch gekennzeichnet, dass** die Mittel (59,65) durch wenigstens ein Zugglied (65) gebildet sind, das an wenigstens einem Ende (63) der Abdeckleiste (59) angreift und das derart gestaltet ist, dass es bestrebt ist das betreffende Ende (63) der Abdeckleiste (59) zu der Vorderkante (43) hin zu ziehen.

12. Kraftfahrzeug nach Anspruch 11, **dadurch gekennzeichnet, dass** das Zugmittel (65) in sich federelastisch dehnbar ist.

13. Kraftfahrzeug nach Anspruch 12, **dadurch gekennzeichnet, dass** dem Zugmittel (65) wenigstens eine Zugfeder zugeordnet ist.

14. Kraftfahrzeug nach Anspruch 7, **dadurch gekennzeichnet, dass** die Mittel Von wenigstens einem Magneten gebildet sind.

15. Kraftfahrzeug nach Anspruch 1, **dadurch gekennzeichnet, dass** die Länge der Abdeckleiste (59) der Länge der Vorderkante (43) entspricht.

16. Kraftfahrzeug nach Anspruch 1, **dadurch gekennzeichnet, dass** die Länge der Abdeckleiste (59) der Länge des Schlitzes (26) entspricht.

17. Kraftfahrzeug nach Anspruch 1, **dadurch gekennzeichnet, dass** die Abdeckleiste (59) breiter ist als der Schlitz (26).

18. Kraftfahrzeug nach Anspruch 1, **dadurch gekennzeichnet, dass** der Schlitz (26) seitlich von wenigstens einem von der Scheibe (23) beabstandeten Rand (27) begrenzt ist und dass die Abdeckleiste (59) bei eingefahrener Rollobahn (31) zumindest über diesen Rand (27) seitlich übersteht.

19. Kraftfahrzeug nach Anspruch 1, **dadurch gekennzeichnet, dass** die Rollobahn (31) aus einem Material besteht, dass mit kleinem Radius aufrollbar ist.

20. Kraftfahrzeug nach Anspruch 1, **dadurch gekennzeichnet, dass** zu der Betätigungseinrichtung (45) eine Aufwickeleinrichtung (34) gehört, die in dem Hohlraum angeordnet ist.

21. Kraftfahrzeug nach Anspruch 20, **dadurch gekennzeichnet, dass** die Aufwickeleinrichtung (34) eine Wickelwelle ist, an der die Rollobahn (31) mit einer Kante befestigt ist.

22. Kraftfahrzeug nach Anspruch 1, **dadurch gekennzeichnet, dass** zu der Betätigungseinrichtung (45) eine Federeinrichtung (46) gehört, durch die die Rollobahn (31) entweder im Sinne des Ausfahrens oder des Einfahrens zu bewegen ist.

23. Kraftfahrzeug nach Anspruch 1, **dadurch gekennzeichnet, dass** zu der Betätigungseinrichtung (45) ein Elektromotor (47) gehört, durch den die Rollobahn (31) entweder im Sinne des Ausfahrens oder des Einfahrens zu bewegen ist.

24. Kraftfahrzeug nach den Ansprüchen 20 und 22, **dadurch gekennzeichnet, dass** die Federeinrichtung (46) an der Aufwickeleinrichtung (34) angreift.

25. Kraftfahrzeug nach Anspruch 23 und 21, **dadurch gekennzeichnet, dass** der Elektromotor (47) an der Wickelwelle (34) angreift.

26. Kraftfahrzeug nach Anspruch 1, **dadurch gekennzeichnet, dass** zu der Betätigungseinrichtung (45) wenigstens ein Schubglied (51,52) gehört, das an der Vorderkante (43) der Rollobahn (31) angreift, um die Rollobahn (31) durch den Schlitz (27) heraus zu ziehen.

## Claims

1. Motor vehicle
with at least one side window (18), which is bordered by an embrasure section (25) and also an opposing window frame edge as well as possibly further window frame edges,
with a cavity located on the other side of the window (18) in relation to the embrasure section (25) and bordered to one side by the embrasure section (25),
with a slit (26) located in the embrasure section (25), with a roller blind (31),
- the blank of which corresponds at least approximately to the shape of the side window (18), at least in one section of its longitudinal extension,
- which has a front edge (43), the course of which corresponds at least approximately to the course of the window frame edge lying opposite the embrasure section (25),
- which is located in the cavity when not in use, and
- which may be moved through the slit (26) in front of the side window (18),
with a reinforcement strip (57), which is provided on the front edge (43) of the roller blind (31),
with an operating unit (45) for the roller blind (31) for moving the roller blind (31) at least back into the cavity, and
with a flexible cover strip (59), which is fastened to the reinforcement strip (57) and is fitted to at least partially close off the slit (26) when the roller blind (31) is located fully in the cavity.

2. Motor vehicle according to Claim 1, **characterised in that** the embrasure section (25) runs below the side window (18).

3. Motor vehicle according to Claim 1, **characterised in that** the embrasure section (25) runs approximately straight.

4. Motor vehicle according to Claim 1, **characterised in that** the side window (18) has a pane (23) which may be moved through the slit (26).

5. Motor vehicle according to Claim 1, **characterised in that** the side window (18) has a pane, which is immovable.

6. Motor vehicle according to Claim 1, **characterised in that** the side window (18) is a side window of a door (7).

7. Motor vehicle according to Claim 1, **characterised in that** means (59, 65) are provided to hold the cover strip (59) in abutment against the front edge (43) over its entire length when the roller blind (31) is at least pushed forward so far that the front edge (43) stands completely above the slit (26).

8. Motor vehicle according to Claim 7, **characterised in that** the means are formed by the cover strip (59) itself, which is elastic.

9. Motor vehicle according to Claim 8, **characterised in that**, when in relaxed state, the cover strip (59) has a curvature, which is smaller than the curvature of the front edge (43) of the roller blind (31), and that the cover strip (59) is automatically held in abutment against the front edge (43) by way of its own elasticity.

10. Motor vehicle according to Claim 1, **characterised in that** the cover strip (59) is connected to the front edge (43) in a central region.

11. Motor vehicle according to Claim 7, **characterised in that** the means (59, 65) are formed by at least one pulling member (65), which acts on at least one end (63) of the cover strip (59) and which is configured such that it endeavours to pull the respective end (63) of the cover strip (59) towards the front edge (43).

12. Motor vehicle according to Claim 11, **characterised in that** the pulling member (65) is inherently elastically expandable.

13. Motor vehicle according to Claim 12, **characterised in that** at least one tension spring is associated with the pulling member (65).

14. Motor vehicle according to Claim 7, **characterised in that** the means are formed by at least one magnet.

15. Motor vehicle according to Claim 1, **characterised in that** the length of the cover strip (59) corresponds to the length of the front edge (43).

16. Motor vehicle according to Claim 1, **characterised in that** the length of the cover strip (59) corresponds to the length of the slit (26).

17. Motor vehicle according to Claim 1, **characterised in that** the cover strip (59) is broader than the slit (26).

18. Motor vehicle according to Claim 1, **characterised in that** the slit (26) is bordered laterally by at least one edge (27) spaced from the pane (23), and that the cover strip (59) laterally projects over this edge (27) when the roller blind (31) is retracted.

19. Motor vehicle according to Claim 1, **characterised in that** the roller blind (31) is made of a material, which may be rolled up to a small radius.

20. Motor vehicle according to Claim 1, **characterised in that** a wind-up means (34) arranged in the cavity is part of the operating unit (45).

21. Motor vehicle according to Claim 20, **characterised in that** the wind-up means (34) is a winding shaft, to which the roller blind (31) is fastened at one edge.

22. Motor vehicle according to Claim 1, **characterised in that** a spring means (46), through which the roller blind (31) may be moved either to extend or retract, is part of the operating unit (45).

23. Motor vehicle according to Claim 1, **characterised in that** an electric motor (47), through which the roller blind (31) may be moved either to extend or retract, is part of the operating unit (45).

24. Motor vehicle according to Claims 20 and 22, **characterised in that** the spring means (46) acts on the wind-up means (34).

25. Motor vehicle according to Claims 23 and 21, **characterised in that** the electric motor (47) acts on the winding shaft (34).

26. Motor vehicle according to Claim 1, **characterised in that** at least one sliding member (51, 52), which acts on the front edge (43) of the roller blind (31) in order to pull the roller blind (31) through the slit (27), is part of the operating unit (45).

## Revendications

1. Véhicule automobile
avec au moins une fenêtre latérale (18) délimitée par une partie intrados (25) et par un bord de cadre de fenêtre disposé en vis-à-vis, ainsi que le cas échéant par des bords de cadre de fenêtre supplémentaires,
avec une cavité qui, par rapport à la partie intrados (25), est située de l'autre côté, comme la fenêtre (18), et est délimitée d'un côté par la partie intrados (25),
avec une fente (26) disposée dans la partie intrados (25),
avec une bande de store roulant (31),
• dont la découpe, au moins dans une partie de sa longueur, correspond au moins approximativement à la forme de la fenêtre latérale (18),
• qui présente un bord avant (43, dont le tracé correspond au moins approximativement à la forme du bord de cadre de fenêtre situé en vis-à-vis de la partie intrados (25),
• qui est située dans la cavité lorsqu'elle n'est pas utilisée,
• qui peut être déplacée devant la fenêtre latérale (18), à travers la fente (26),
avec une baguette de renfort (57) qui est prévue sur le bord avant (43) de la bande de store roulant (31),
avec un dispositif d'actionnement (45) pour la bande de store roulant (31) pour ramener la bande de store (31) au moins dans la cavité,
avec une baguette de couverture (59) flexible, qui est fixée à la baguette de renfort (57) et est conformée pour fermer au moins partiellement la fente (26), lorsque la bande de store roulant (31) se trouve entièrement à l'intérieur de la cavité.

2. Véhicule automobile selon la revendication 1, **caractérisé en ce que** la partie intrados (25) s'étend en-dessous de la fenêtre latérale (18).

3. Véhicule automobile selon la revendication 1, **caractérisé en ce que** la partie intrados (25) est sensiblement rectiligne.

4. Véhicule automobile selon la revendication 1, **caractérisé en ce que** la fenêtre latérale (18) comporte une vitre (23) qui peut être déplacée à travers la fente (26).

5. Véhicule automobile selon la revendication 1, **caractérisé en ce que** la fenêtre latérale (18) comporte une vitre qui est fixe.

6. Véhicule automobile selon la revendication 1, **caractérisé en ce que** la fenêtre latérale (18) est une fenêtre latérale d'une portière (7).

7. Véhicule automobile selon la revendication 1, **caractérisé en ce que** des moyens (59, 65) sont prévus pour maintenir la baguette de couverture (59) appliquée sur toute sa longueur contre le bord avant (43), lorsque la bande de store (31) est au moins suffisamment sortie pour que le bord avant (43) soit entièrement situé au-dessus de la fente.

8. Véhicule automobile selon la revendication 7, **caractérisé en ce que** les moyens sont formés par la baguette de couverture (59) elle-même qui est élastique.

9. Véhicule automobile selon la revendication 8, **caractérisé en ce que** la baguette de couverture (59), à l'état non tendu, présente une courbure qui est inférieure à la courbure du bord avant (43) de la bande de store (31) et **en ce que** la baguette de couverture (59) par son élasticité propre est maintenue automatiquement appliquée sur le bord avant (43).

10. Véhicule automobile selon la revendication 1, **caractérisé en ce que** la baguette de couverture (59), dans une partie médiane, est liée au bord avant (43).

11. Véhicule automobile selon la revendication 7, **caractérisé en ce que** les moyens (59, 65) sont formés par au moins un organe de traction (65) qui agit en au moins une extrémité (63) de la baguette de couverture (59) et est conformé de manière à ce qu'il tire l'extrémité (63) concernée de la baguette de couverture (59) en direction du bord avant (43).

12. Véhicule automobile selon la revendication 11, **caractérisé en ce que** le moyen de traction (65) est extensible à la manière d'un ressort.

13. Véhicule automobile selon la revendication 12, **caractérisé en ce qu'**au moins un ressort de traction est associé au moyen de traction (65).

14. Véhicule automobile selon la revendication 7, **caractérisé en ce que** les moyens sont formés par au moins un aimant.

15. Véhicule automobile selon la revendication 1, **caractérisé en ce que** la longueur de la baguette de couverture (59) correspond à la longueur du bord avant (43).

16. Véhicule automobile selon la revendication 1, **caractérisé en ce que** la longueur de la baguette de couverture (59) correspond à la longueur de la fente (26).

17. Véhicule automobile selon la revendication 1, **caractérisé en ce que** la baguette de couverture (59) est plus large que la fente (26).

18. Véhicule automobile selon la revendication 1, **caractérisé en ce que** la fente (26) est délimitée latéralement par au moins un bord (27) distant de la vitre (23) et **en ce que** la baguette de couverture (59), lorsque la bande de store (31) est rentrée, déborde latéralement au moins au-delà de ce bord (27).

19. Véhicule automobile selon la revendication 1, **caractérisé en ce que** la bande de store (31) est en un matériau enroulable avec un faible rayon.

20. Véhicule automobile selon la revendication 1, **caractérisé en ce que** le dispositif d'actionnement (45) comprend un dispositif d'enroulement (34), qui est disposé à l'intérieur de la cavité.

21. Véhicule automobile selon la revendication 20, **caractérisé en ce que** le dispositif d'enroulement (34) est un axe d'enroulement auquel la bande de store (31) est fixée par un bord.

22. Véhicule automobile selon la revendication 1, **caractérisé en ce que** le dispositif d'actionnement (45) comprend un système de ressort (46) par lequel la bande de store (31) peut être déplacée dans le sens de la sortie ou dans le sens de la rentrée.

23. Véhicule automobile selon la revendication 1, **caractérisé en ce que** le dispositif d'actionnement (45) comprend un moteur électrique (47) par lequel la bande de store (31) peut être déplacée dans le sens de la sortie ou dans le sens de la rentrée.

24. Véhicule automobile selon les revendications 20 et 22, **caractérisé en ce que** le système de ressort (46) agit sur le dispositif d'enroulement (34).

25. Véhicule automobile selon les revendications 21 et 23, **caractérisé en ce que** le moteur électrique (47) agit sur l'axe d'enroulement (34).

26. Véhicule automobile selon la revendication 1, **caractérisé en ce que** le dispositif d'actionnement (45) comprend au moins un organe de traction (51, 52), qui agit sur le bord avant (43) de la bande de store (31) pour sortir ladite bande de store (31) à travers la fente (27).
